# EUROPEAN PATENT SPECIFICATION

(11) **EP 4 194 133 B1**
(45) Date of publication and mention of the grant of the patent: **21.01.2026**
(21) Application number: 22211997.6
(22) Date of filing: 07.12.2022
(51) Int. Cl.: B23K 9/04, B23K 9/095, B23K 9/12, B23K 9/173

(54) **SYSTEM AND METHOD FOR INCREASING DEPOSITION RATES USING MULTIPLE FEED WIRES**
SYSTEM UND VERFAHREN ZUR ERHÖHUNG DER ABSCHEIDUNGSRATEN MIT MEHREREN ZUFUHRDRÄHTEN
SYSTÈME ET PROCÉDÉ POUR AUGMENTER LES VITESSES DE DÉPÔT À L'AIDE DE MULTIPLES FILS D'ALIMENTATION

(30) Priority: 07.12.2021 US 202117544408
(43) Date of publication of application: 14.06.2023
(60) Divisional application: 25211489.7
(73) Proprietor: Relativity Space, Inc., Long Beach, CA 90807 (US)
(72) Inventor: Gruber, Fritz C., Long Beach, 90815 (US); Campbell, Jeffrey, Long Beach, 90815 (US); Aguilar, Louie, Long Beach, 90815 (US); Stengline, Erik Daniel, Long Beach, 90815 (US); Tonneslan, Samuel, Long Beach, 90815 (US)
(74) Representative: EIP

(56) References cited:
- JP-A- 2004 148 367
- JP-A- 2019 188 406
- US-A1- 2015 202 709

## Description

### TECHNICAL FIELD

The embodiments relate to welding, 3D metal printing, process modeling, process monitoring, process optimization, and to adjusting the rate at which material is fed into a weld pool based on input power and using multiple feed wires.

### BACKGROUND

Three dimensional (3D) printing of large metallic structures typically involves using an energy source to create a weld pool, and feeding a metal wire (a feed wire) into the weld pool while moving the weld pool using a print head. Some systems use lasers to add energy to the weld pool. Some systems use electricity to add energy to the weld pool. The systems that use electricity can be similar to welders that pass an electric current through the feed wire and into the weld pool. The electric current adds energy to the weld pool as the feed wire is fed into the weld pool. The weld pool can be moved by moving the feed wire relative to the structure being printed, thereby depositing metal along the weld pool's travel path. As the weld pool moves, its trailing edge cools and solidifies. A complete structure can be printed by moving the weld pool along a complex and predetermined path while providing energy that keeps the weld pool molten and feeding the feed wire into the weld pool. The physics of the deposition process limit the rate at which the feed wire can be fed into the melt pool and the rate at which energy can be added to the weld pool. The physical limitations of the deposition process thereby limit the speed at which large structures can be printed.
US 2015/202709 describes a method for submerged arc welding, comprising the steps of guiding a first hot wire towards a work piece and guiding a cold wire at a variable feed speed. JP2004148367A describes an electrode wire feeding device for feeding a consumable electrode wire, a filler wire feeding device for feeding a filler wire, a main welding power source for supplying power to the consumable electrode wire and its feeding device, and a filler power source for supplying power to the filler wire and its feeding device. JP2019188406A describes a consumable electrode type arc welding device comprising an electricity output part that outputs output electricity, a conducting electrode supply part that supplies consumable electrodes to which the output electricity is conducted, and a nonconducting electrode supply part that supplies consumable electrodes to which the output electricity is not conducted.

### BRIEF SUMMARY OF SOME EXAMPLES

According to a first aspect of the present invention there is provided a system as defined in appended claim 1. According to a second aspect of the present invention there is provided a method as defined in appended claim 6. Additional aspects of the present invention are set out in the dependent claims.
The following presents a summary of one or more aspects of the present disclosure, in order to provide a basic understanding of such aspects. This summary is not an extensive overview of all contemplated features of the disclosure and is intended neither to identify key or critical elements of all aspects of the disclosure nor to delineate the scope of any or all aspects of the disclosure. Its sole purpose is to present some concepts of one or more aspects of the disclosure as a prelude to the more detailed description that is presented later.

In some implementations of the methods and devices the second wire end is fed into a leading edge of the weld pool. In some implementations of the methods and devices the second feed rate maximizes a material deposition rate.

In some implementations of the methods and devices the second feed rate maximizes a material deposition rate that is a function of a power value that is an amount of electric power in the input electric power. In some implementations of the methods and devices the first feed rate, an electrode wire cross-section area, the second feed rate, and a second wire cross-section area determine the material deposition rate. In some implementations of the methods and devices a deposition defect indicates that the power value has exceeded a power value threshold, a defect detector is used to determine the power value threshold, and the power value is set based on the power value threshold. In some implementations of the methods and devices the electrode wire is a first alloy, the second wire is a second alloy, and the first feed rate and the second feed rate are controlled to produce a desired alloy at a weld pool location. In some implementations of the methods and devices the desired alloy varies based on the weld pool location in relation to the workpiece.

In some implementations of the methods and devices a power value indicates an amount of electric power in the input electric power, a travel speed value indicates the first travel speed, and the second feed rate is determined using the power value, the travel speed value, and the first feed rate. In some implementations of the methods and devices the second feed rate maximizes a material deposition rate that is a function of the power value that is the amount of electric power in the input electric power. In some implementations of the methods and devices the first feed rate, an electrode wire cross-section area, the second feed rate, and a second wire cross-section area determine the material deposition rate. In some implementations of the methods and devices a deposition defect indicates that the power value has exceeded a power value threshold, a defect detector is used to determine the power value threshold, and the power value is set based on the power value threshold.

In some implementations of the methods and devices, the system can include a means for maximizing a material deposition rate without introducing a deposition defect.

These and other aspects will become more fully understood upon a review of the detailed description, which follows. Other aspects, features, and embodiments will become apparent to those of ordinary skill in the art, upon reviewing the following description of specific, exemplary embodiments in conjunction with the accompanying figures. While features may be discussed relative to certain embodiments and figures below, all embodiments can include one or more of the advantageous features discussed herein. In other words, while one or more embodiments may be discussed as having certain advantageous features, one or more of such features may also be used in accordance with the various embodiments discussed herein. In similar fashion, while exemplary embodiments may be discussed below as device, system, or method embodiments such exemplary embodiments can be implemented in various devices, systems, and methods.

### BRIEF DESCRIPTION OF THE DRAWINGS

FIG. 1 is a high-level diagram illustrating a print head using two feed wires to deposit material into a weld pool according to some aspects.
FIG. 2 is a high-level diagram illustrating a print head with two wire feeders being moved to thereby move a weld pool according to some aspects.
FIG. 3 is a high-level diagram illustrating an electrode wire feeder being moved to thereby move a weld pool while a second wire feeder deposits additional material into the weld pool according to some aspects.
FIG. 4 is a diagram that illustrates equations that model a relationship between a Q value and other parameters of a two wire deposition process, according to some aspects.
FIG. 5 is a high-level diagram illustrating a second feed rate estimator that determines a feed rate for the second wire according to some aspects.
FIG. 6 is a high-level diagram that illustrates using a defect detector to optimize input electric power according to some aspects.
FIG. 7 is a high-level diagram that illustrates using edge sensors to optimize input electric power and other process parameters according to some aspects.
FIG. 8 is a high-level diagram that illustrates using an alloy schedule to deposit different alloys at different locations in a structure according to some aspects.
FIG. 9 is a high-level system diagram illustrating a method for increasing deposition rates using multiple feed wires according to some aspects.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment. Thus, the phrases "in one embodiment", "in an embodiment", and similar language throughout this specification may, but do not necessarily, all refer to the same embodiment.

Recently, large 3D metal printers have been produced for printing large 3D structures. The printing process involves moving a weld pool along a path while feeding material into the weld pool. It is desirable to print the structures quickly such that more structures can be printed within a time period, thereby improving the return on investment of building the printers, printing facilities etc. A structure requires a known amount of material. For example, a structure may require 1000 kilograms of aluminum. The feed rate, WFS_{electrode}, is the rate at which wire is fed into the weld pool. For example, the feed rate can be 1 cm/sec. The wire has a cross-section area. For example, an aluminum wire with a square cross-section that is 0.1 cm per side has a 0.01 cm² cross-section. Feeding such a wire into the weld pool at 1 cm/sec deposits 0.1 cm³ of aluminum per second. The density of aluminum, ρₐₗᵤₘᵢₙᵤₘ, is 2.71 g/cm³. Note that this is the density of pure aluminum and that alloys and other metals will have different densities. The exemplary process is therefore depositing aluminum at a rate of 0.271 g/sec. It will take 1025 hours to print the 1000 kg structure.

The feed wire carrying electrical energy into the weld pool is the electrode wire. The deposition rate can be increased by increasing the feed rate of the electrode wire, but increasing that feed rate has a side effect of increasing the input electrical current. In welding, this is known as burn-off. The input current, I(WFS_{electrode}), is therefore a function of the electrode wire feed rate. The relationship between the input current and the feed rate is called the wire's burn-off characteristic. Those practiced in welding using feed wires are familiar with burn-off and the burn-off characteristic of electrode wires. The end result is that the physics of the welding process limit the electrode wire feed rate because high currents can result in welding defects and other problems. Additional feed wires can be used to deposit additional material into the weld pool. The total deposition rate is the rate at which material is deposited using all of the feed wires. Expanding on the example above, a second wire identical to the electrode wire can be fed into the weld pool. If the second wire can be fed into the weld pool at the same rate as the electrode wire, then the printing time is cut in half. The rate at which the second wire can be fed into the weld pool is a parameter that can be determined based on a mathematical model of the two wire deposition process and the other process parameters. Using the mathematical model saves considerable development time because otherwise a great deal of experimentation must be carried out to map out the second wire feed rate as a function of the other process parameters such as input electric power and the electrode feed rate. Even more experimentation would be required when different wires with different burn-off characteristics are to be used.

In 3D printing, a toolpath file can be used to specify the actions that printing components are to take, the order in which the actions are to be taken, and when each action is to be taken. For example, a first action can be to move the print head along a specified path at a specified travel speed. At the same time, wire feeders can feed wires at specified rates and the electrode current and voltage produced by an electric power source can be set. Another action can be taken when the print head completes its movement along the first path such that the print head moves along a different specified path at the same or a different specified travel speed. Changes in the feed rates and input electric power can be set to occur at various locations along the specified travel paths. Those familiar with 3D printing are familiar with the creation of and contents of toolpath files. Common toolpath file formats include GCODE, X3G, etc.

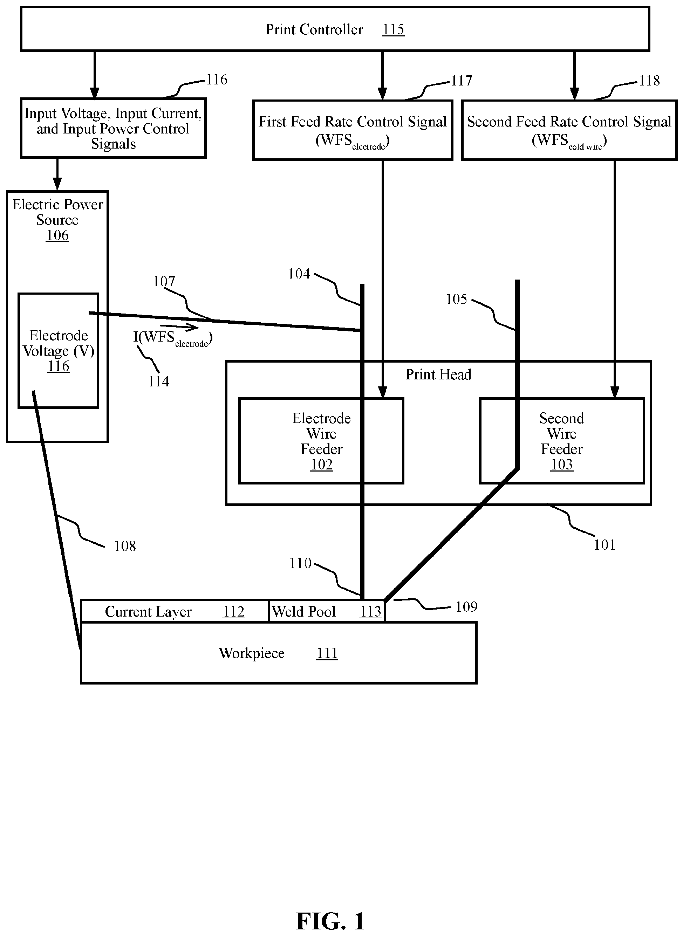

FIG. 1 is a high-level diagram illustrating a print head 101 using two feed wires to deposit material into a weld pool according to some aspects. The print controller 115 can interpret a toolpath file and can control various components of a 3D printer in accordance with the toolpath file. Based on the toolpath file, the print controller 115 can output certain control signals at certain times or points in the print. As is known in the art of machine control, the control signals may be analog signals or digital signals. Signals (e.g., control signals) may indicate or encode values (e.g., control values). The print controller 115 can send control signals to other components that can receive those control signals. An electric power source may receive control signals such as an input voltage signal, an input current signal, an input power control signal, etc. from the print controller 115. Based on the control values from the print controller 115, the electric power source 106 can produce an electrode voltage 116 and an electrode current, I(WFS_{electrode}). The electrode current 114 can pass through an electrode cable 107 to the electrode wire 104.

A print head 101 can include an electrode wire feeder 102 and a second wire feeder 103. The print head 101 may receive control signals such as a first feed rate control signal 117 and a second feed rate control signal 118 from the print controller 115. Based on the control values from the print controller 115, the electrode wire feeder 102 may feed an electrode wire 104 at the first feed rate WFS_{electrode}. The electrode current 114 can pass from the electric power source 106, through the electrode cable 107, through the electrode wire 104, into the workpiece 111, through the work cable 108, and back to the electric power source 106. In some embodiments, the electric current flows in a direction opposite that indicated in FIG. 1. The electrode wire thereby delivers input electric power to the electrode end 110 where the electrode wire 104 melts into a weld pool 113. The weld pool is a volume of molten metal on the workpiece 111. Moving the print head 101 relative to the workpiece 111 moves the electrode end 110 and thereby moves the weld pool 113 relative to the workpiece 111. As the weld pool is moved, a layer of cooling metal remains behind and solidifies. As is well known in 3D printing, the workpiece can be built up layer by layer. The current layer 112 is the layer currently being deposited on the workpiece.

Based on the control values (e.g., second feed rate control signal 118) from the print controller 115, the second wire feeder 103 may feed a second wire 105 at the second feed rate WFS_{cold wire}. The second wire end 109 is also fed into the weld pool 113 where it melts. The second wire end 109 is melted by the heat energy in the weld pool. That heat energy is produced by the electrode current 114. In the illustrated embodiment, the second wire 105 carries no electric current that adds energy to the weld pool. Other embodiments may have such an electric current in the second wire.

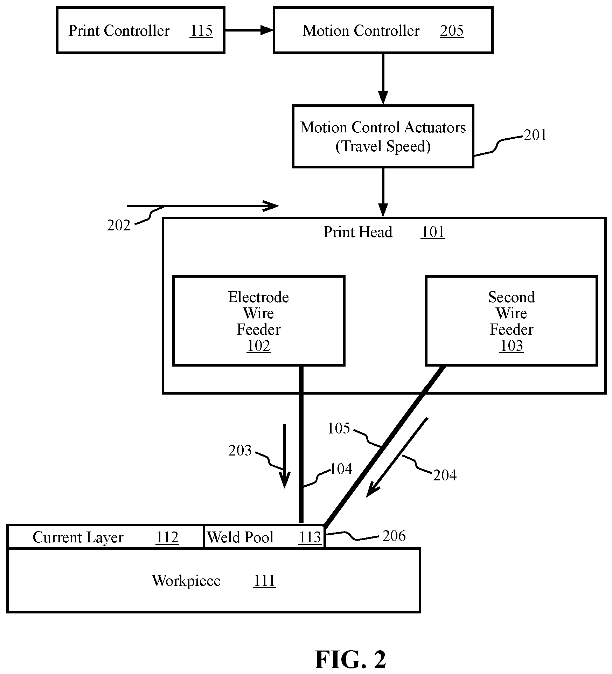

FIG. 2 is a high-level diagram illustrating a print head 101 with two wire feeders being moved to thereby move a weld pool according to some aspects. A motion controller 205 that is controlled by the print controller 115 may control actuators such as motion control actuators 201. The motion control actuators 201 may be servo motors, stepper motors, hydraulic cylinders, or some other type of actuator. The motion control actuators 201 can move the print head 101 relative to the workpiece 111. The speed at which the print head moves relative to the workpiece is the travel speed 202. As the print head moves, the electrode wire 104 can be fed into the weld pool 113 at a first feed rate 203 and the second wire 105 can be fed into the weld pool at a second feed rate 204. FIG. 2 shows the electrode wire 104 and the second wire 105 being fed into the leading edge 206 of the weld pool 113 with the electrode wire 104 behind the second wire 105. In some embodiments, the second wire 105 may be fed into the weld pool 113 behind the electrode wire 104. In some embodiments, the second wire 105 may be fed into the weld pool 113 behind the electrode wire 104 and behind the leading edge. Each arrangement has advantages over the others. Positioning the electrode wire ahead of the second wire may deposit energy at the very forward edge of the melt pool and may improve adhesion between the layers. Positioning the second wire ahead of the electrode wire may help ensure that the material deposited by the second wire passes through the hottest sections of the weld pool. Feeding the second wire into the weld pool behind the leading edge may help control the cooling profile behind the leading edge.

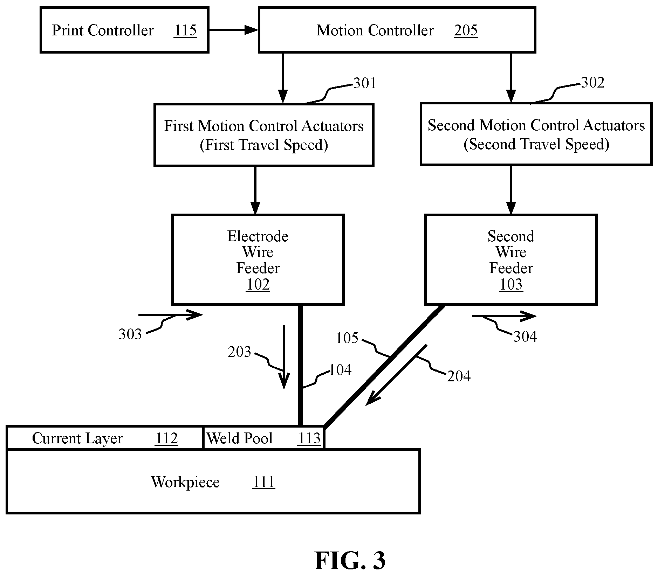

FIG. 3 is a high-level diagram illustrating an electrode wire feeder 102 being moved to thereby move a weld pool 113 while a second wire feeder 103 deposits additional material into the weld pool 113 according to some aspects. The motion controller 205 may be controlled by the print controller 115 and may in turn control actuators such as first motion control actuators 301 and second motion control actuators 302. The first motion control actuators 301 moves the electrode wire feeder 102 relative to the workpiece 111. Moving the electrode wire feeder 102 relative to the workpiece 111 also moves the weld pool 113 relative to the workpiece 111. The electrode wire feeder 102 moves relative to the workpiece 111 at a first travel speed 303.

The second motion control actuators 302 moves the second wire feeder 103 relative to the workpiece 111 at a second travel speed 304. Moving the second wire feeder 103 relative to the workpiece 111 does not move the weld pool 113 when the second wire is not depositing energy (e.g., via an electric current) into the weld pool. By moving the second wire feeder independently from the electrode wire feeder 102, the second wire end can be fed into the weld pool at different positions relative to the electrode end. As such, the cooling profile of different parts of the weld pool can be controlled because the weld pool cools where the second wire is fed into the weld pool. As such, different edges of the weld pool may be set to solidify before other edges. For example, at one location in a structure, an outside edge of a cylinder may be set to solidify first while in another location another edge, such as an inside edge of a cone may be set to solidify first. Solidifying the inside edge of a cone may be beneficial because portions of that inside edge may overhang previously printed layers. Overhang refers to areas that are not fully supported from underneath.

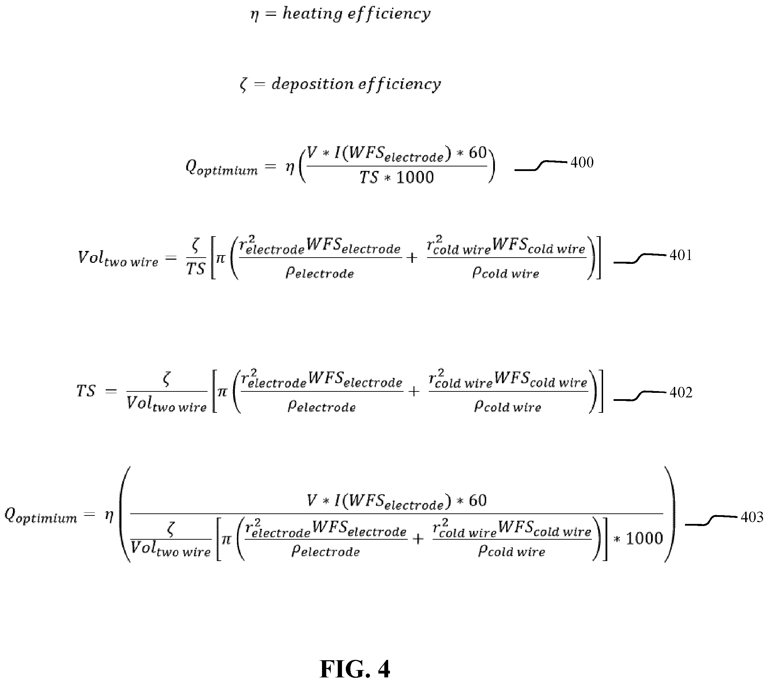

FIG. 4 is a diagram that illustrates equations that model a relationship between a Q value and other parameters of a two wire deposition process, according to some aspects. The heating efficiency, η, is a constant value that is a known property of the electrode wire. The heating efficiency may be determined experimentally if it is not known. The deposition efficiency, ζ, is a constant value that is a known property of the electrode wire. The deposition efficiency may be determined experimentally if it is not known. The input voltage, V, is the voltage supplied via the electric power source. The input current, I(WFS_{electrode}), is the electrode current. The input electric power is the input voltage multiplied by the input current. A power value can indicate the amount of input electric power provided by the electric power source. The power value can be calculated using measurements of the input voltage and the input current. As discussed above, the electrode current is a function of the first feed rate, WFS_{electrode}. As such, the power value is also a function of the first feed rate, WFS_{electrode}. The travel speed, TS, is the speed at which the weld pool is moved relative to the workpiece. Moving the electrode end moves the weld pool and moving the electrode wire feeder moves the electrode end. As such, TS can be the travel speed of the electrode wire feeder relative to the workpiece. When a print head includes the electrode wire feeder, TS can be the travel speed of the print head relative to the workpiece. A first equation 400 can be used to calculate the Q value ( Qₒₚₜᵢₘᵤₘ) as a function of the heating efficiency, the power value, and the travel speed.

The Q value may be interpreted as a value based on the amount of energy being deposited into the weld pool by the electrode wire. The Q value can be determined by the first equation 400. The first equation 400 does not reference the second wire, as such the Q value determined using the first equation 400 is not a function of the second feed rate or other parameters of the second wire. The second equation 401 can be used to determine the weight (ρ is used to indicate the density of a material) of the material deposited into the weld pool per unit length along the workpiece. The second equation 401 assumes wire with circular cross-sections. As such, the r² terms and the π outside the parentheses indicate that the area of a circular cross-section is multiplied by a length per unit time (WFS). Those practiced in geometrical calculations (e.g., most undergraduate engineers) realize that the second equation 401 may easily be adapted for embodiments using wires having non-circular cross-sections and to embodiments using additional wires such as a third wire, fourth wire, etc. Solving the second equation 401 for the travel speed, TS, produces the third equation 402. Replacing the travel speed, TS, in the first equation 400 with the right side expression of the third equation 402 produces the fourth equation 403. The Q value can be determined using the first equation 400. Having determined the Q value, the fourth equation 403 may be used to determine the second wire feed rate, WFS_{cold wire}. According to the model, using the second feed rate for the second wire maximizes the material deposition rate. For example, a numerical method such as one of the many well known successive approximation methods may be used to determine WFS_{cold wire}. After using the model to determine the second wire feed rate, the second wire can be fed into the weld pool at the second wire feed rate to thereby maximize the material deposition rate according to the model. The material deposition rate is the sum of the electrode wire deposition rate and the second wire deposition rate. The electrode wire deposition rate is the rate at which the electrode wire deposits material into the weld pool. The second wire deposition rate is the rate at which the second wire deposits material into the weld pool.

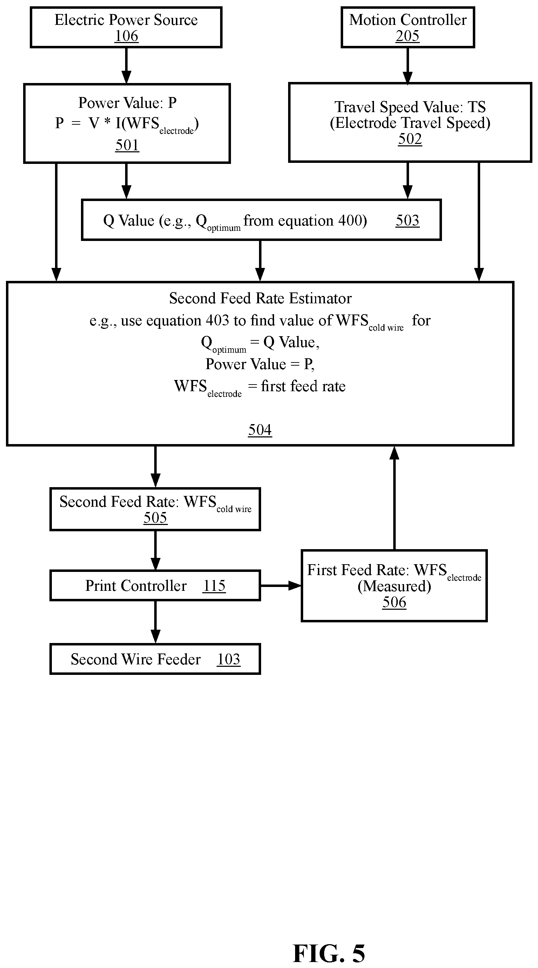

FIG. 5 is a high-level diagram illustrating a second feed rate estimator 504 that determines a feed rate for the second wire according to some aspects. A power value 501, P, can indicate the amount of input electric power produced by the electric power source 106. The travel speed value 502, TS, can indicate the speed at which the weld pool moves relative to the workpiece. TS can be measured by measuring the speed at which the weld pool, electrode end, electrode wire feeder, or print head is moved. TS may be a readable parameter provided by the motion controller 205 because the electrode end, electrode wire feeder, and print head are moved at a speed that is controlled by the motion controller 205. The first equation 400 can be used to determine the Q value 503 by using the power value 501, travel speed value 502, and constant values such as the heating efficiency. The constant values are values that are treated as non-changing, or constant, during a printing operation (e.g., heating efficiency, deposition efficiency, electrode wire radius (r_{electrode}), second wire radius (r_{cold wire}), etc.) The second feed rate estimator 504 can use the fourth equation 403 to estimate the second feed rate 505, WFS_{cold wire}, based on current values of the Q value, power value, and first feed rate. The value determined for the second feed rate 505 can be sent to the print controller 115 such that the second wire feeder 103 feeds out the second wire at the second feed rate. The print controller may also provide the current value of the first feed rate 506. The first feed rate 506 can be a measured value determined by measuring the rate at which the electrode wire is fed in the weld pool. The first feed rate may be a readable parameter provided by the print controller 115 (or motion controller if the motion controller controls the wire feeders) when the electrode wire is fed at a speed that is controlled by the print controller 115.

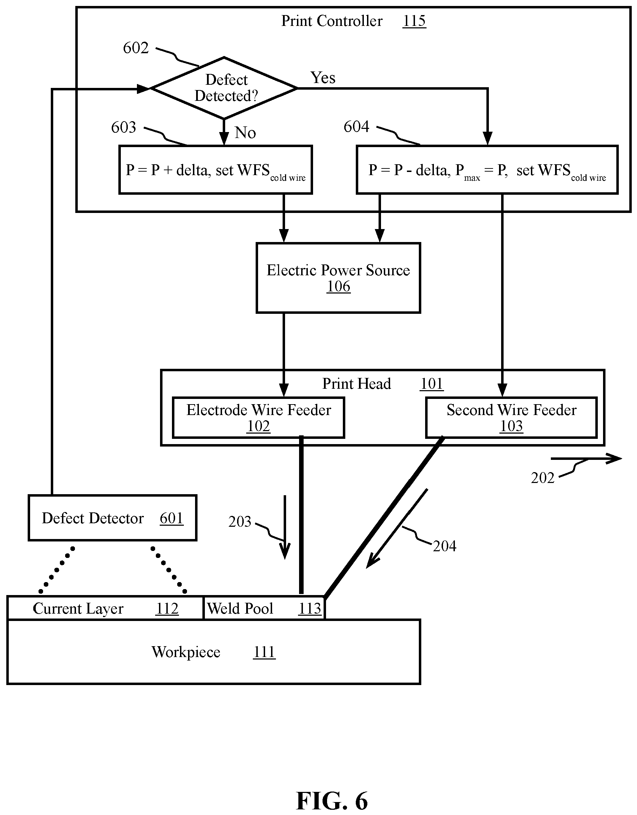

FIG. 6 is a high-level diagram that illustrates using a defect detector 601 to optimize input electric power according to some aspects. Those practiced in welding, steel construction, and related fields are familiar with a variety of defect detectors that can detect flaws in a weld. The defect detector may detect voids, metal dripping, weld splatter, and other defects when the printing process is producing a flawed workpiece. The defect detector 601 can send a defect detected signal to the print controller 115 when a defect is detected. The print controller 115 can implement a power adjustment process that adjusts the input electric power based on whether a defect is currently detected. At decision block 602, the power adjustment process can determine whether a defect is currently detected. If a defect is detected at decision block 602, the process can reduce the input electric power by a set amount, delta, may set a maximum power threshold value, Pₘₐₓ, and can set the second feed rate. Pₘₐₓ can indicate the maximum allowable input electric power. The second feed rate may be changed when the second feed rate is a function of input electric power, P. The second feed rate can also be a function of other parameters (e.g., travel speed, TS). If no defect is detected at decision block 602, the process can increase the input electric power by a set amount, delta, and can set the second feed rate. The input electric power may be limited such that it does not exceed Pₘₐₓ. The second feed rate may be changed when the second feed rate is a function of input electric power. The "delta" term indicates a value by which a parameter can be adjusted. The value used for a delta may be different in different settings (e.g., block 603 and block 604) and at different times. As discussed above, the second feed rate can be a function of parameters such as the input electric power. A model such as the model in FIG. 4 can be used to determine a new value for the second feed rate based on the new value for the input electric power. The print controller can adjust the printing process to use the new input electric power and the new second feed rate.

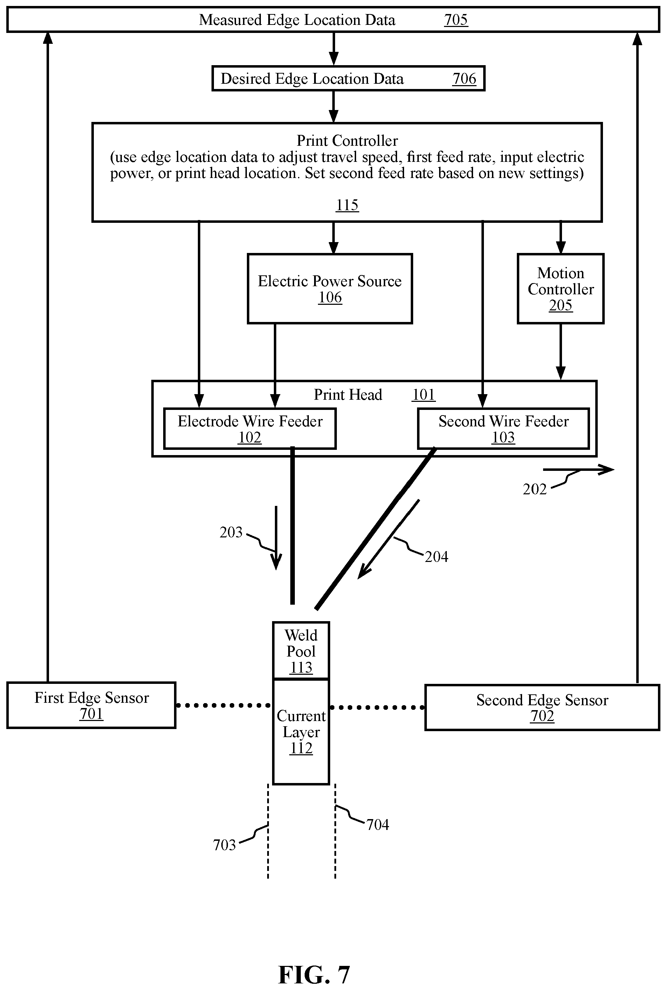

FIG. 7 is a high-level diagram that illustrates using edge sensors to optimize input electric power and other process parameters according to some aspects. A first edge sensor 701 and a second edge sensor 702 can produce measured edge location data 705 that indicates the locations of the edges of the current layer behind the weld pool. Desired edge location data 706 can indicate the locations where the edges should be. A first desired edge location 703 can indicate the desired location of the edge measured by the first edge sensor 701. A second desired edge location 704 can indicate the desired location of the edge measured by the second edge sensor 702. Comparing the measured edge location data 705 and the desired edge location data 706 may indicate that the current layer is shifted from its desired location. As such, the print controller may shift the print head such that the measured edge locations are at the desired edge locations.

Comparing the measured edge location data 705 and the desired edge location data 706 may indicate that the current layer is too thin. As such, the print controller may adjust the printing parameters such that more material is deposited per unit length (e.g., decrease TS). Comparing the measured edge location data 705 and the desired edge location data 706 may indicate that the current layer is too thick. As such, the print controller may adjust the printing parameters such that less material is deposited per unit length (e.g., increase TS). As discussed above, the second feed rate can be a function of parameters such as TS. A model such as the model in FIG. 4 can be used to determine a new value for the second feed rate based on the new value for the travel speed, TS. The print controller can adjust the printing process to use the new travel speed and the new second feed rate.

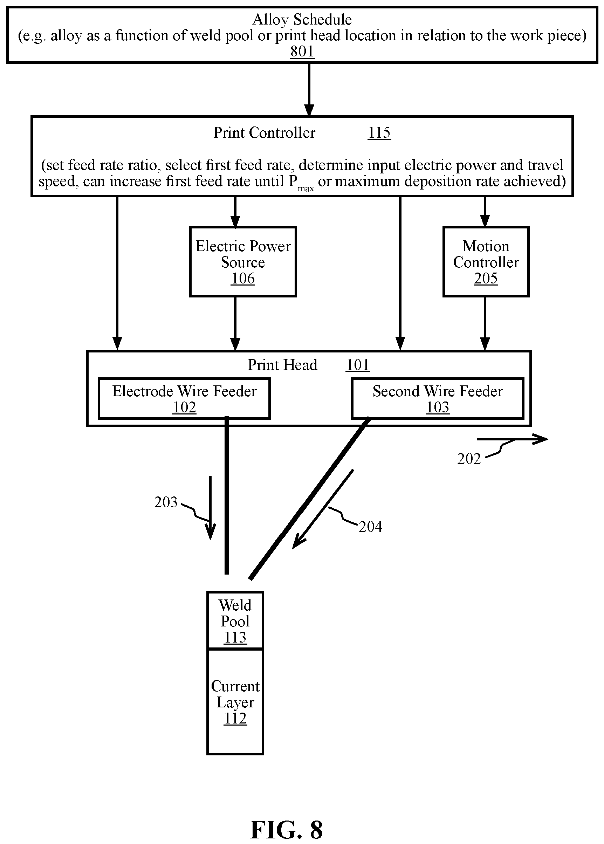

FIG. 8 is a high-level diagram that illustrates using an alloy schedule 801 to deposit different alloys at different locations in a structure according to some aspects. The alloy schedule can indicate the ratio of material to be deposited at different locations in the workpiece to thereby deposit a desired alloy at those locations. As such, the desired alloy can be a function of the weld pool location, electrode wire feeder locations, print head locations, etc. For example, depositing two units of material from the electrode wire and one unit of material from the second wire can produce a first alloy while depositing two units of material from the electrode wire and two units of material from the second wire can produce a second alloy. The alloy schedule 801 may indicate that the lowest meter of a cylindrical workpiece is to be the first alloy and that the second lowest meter is to be the second alloy. A mathematical model, such as that shown in FIG. 4, can be used to determine values for the input power, the travel speed, and the feed rates such that the desired alloy is produced. More specifically, for the first alloy 0.5*WFS_{electrode} can be used instead of WFS_{cold wire} in the fourth equation 403. A numerical method such as one of the many well known successive approximation methods may be used to determine values for the input electric power, travel speed, and WFS_{electrode} that produce the desired alloy. It may be necessary to iterate using both the first equation 400 and the fourth equation 403 to determine the values. Changes in a parameter (e.g., P due to detected defects or TS to adjust weld pool width) may require using the model to determine the other printing parameters.

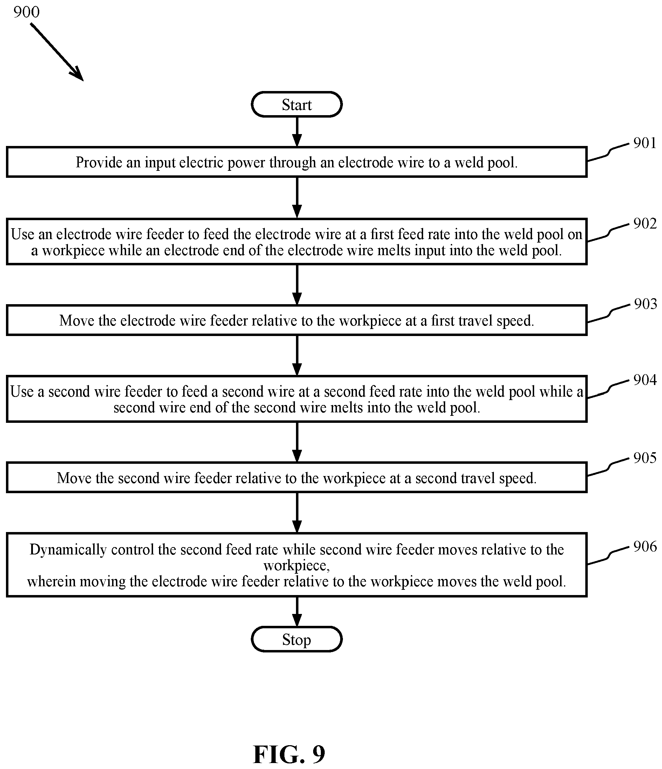

FIG. 9 is a high-level system diagram illustrating a method for increasing deposition rates using multiple feed wires according to some aspects. After the start, at block 901 the method can provide an input electric power through an electrode wire to a weld pool. At block 902 the method can use an electrode wire feeder to feed the electrode wire at a first feed rate into the weld pool on a workpiece while an electrode end of the electrode wire melts input into the weld pool. At block 903 the method can move the electrode wire feeder relative to the workpiece at a first travel speed. At block 904 the method can use a second wire feeder to feed a second wire at a second feed rate into the weld pool while a second wire end of the second wire melts into the weld pool. At block 905 the method can move the second wire feeder relative to the workpiece at a second travel speed. At block 906 the method can dynamically control the second feed rate while second wire feeder moves relative to the workpiece, wherein moving the electrode wire feeder relative to the workpiece moves the weld pool.

A parameter is dynamically controlled when is changed during a printing process because of a change in a measured value (e.g., defect/edge detector output, measurement of input power changed, etc.) or because of a change to another parameter (e.g., changing WFS_{cold wire} because of a change in TS, WFS_{electrode}, or input power).

Although the operations of the method(s) herein are shown and described in a particular order, the order of the operations of each method may be altered so that certain operations may be performed in an inverse order or so that certain operations may be performed, at least in part, concurrently with other operations. Instructions or sub-operations of distinct operations may be implemented in an intermittent and/or alternating manner.

It should also be noted that at least some of the operations for the methods described herein may be implemented using software instructions stored on a computer usable storage medium for execution by a computer. As an example, an embodiment of a computer program product includes a computer usable storage medium to store a computer readable program.

The computer-usable or computer-readable storage medium can be an electronic, magnetic, optical, electromagnetic, infrared, or semiconductor system (or apparatus or device). Examples of non-transitory computer-usable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A system comprising:
an electrode wire (104) that has an electrode end;
a second wire (105) that has a second wire end;
an electric power source configured to provide an input electric power through the electrode wire (104) to a weld pool (113) on a workpiece (111);
an electrode wire feeder (102) configured to feed the electrode wire (104) into the weld pool at a first feed rate while the electrode end melts into the weld pool (113);
a first motion control actuator (301) configured to move the electrode wire feeder (102) relative to the workpiece (111) such that the electrode wire feeder (102) moves at a first travel speed relative to the workpiece (111);
a second wire feeder (103) configured to feed the second wire (105) into the weld pool at a second feed rate while the second wire end melts into the weld pool (113);
**characterised in that** the system further comprises:
a second motion control actuator (302) configured to move the second wire feeder (103) relative to the workpiece (111) such that the second wire feeder (103) moves at a second travel speed relative to the workpiece (111), the second wire feeder being moveable independently of the electrode wire feeder; and
a print controller (115) configured to dynamically control the electrode wire feeder (102) and the second wire feeder (103) while the electrode wire feeder (102) and the second wire feeder (103) move relative to the workpiece (111),
wherein moving the electrode wire feeder (102) relative to the workpiece moves the weld pool (113).

2. The system of claim 1, wherein the second wire feeder (103) is positioned such that the second wire end is fed into a leading edge of the weld pool (113) during printing.

3. The system of claim 1, wherein:
the print controller (115) is configured to control the second wire feeder (103) by providing a second feed rate control signal (118) for feeding the second wire at the second feed rate, the second feed rate being determined using the input electric power, a speed at which the weld pool is moved relative to the workpiece, and the first feed rate.

4. The system of claim 1, wherein moving the second wire feeder (103) relative to the workpiece (111) controls the cooling profile of the weld pool (113).

5. The system of claim 1, further comprising a defect detector, wherein the print controller can change the input electric power based on receiving a defect detection signal from the defect detector.

6. A method comprising:
providing an input electric power through an electrode wire (104) to a weld pool (113);
using an electrode wire feeder (102) to feed the electrode wire (104) at a first feed rate into the weld pool (113) on a workpiece (111) while an electrode end of the electrode wire (104) melts input into the weld pool (113);
moving the electrode wire feeder (102) relative to the workpiece (111) at a first travel speed;
using a second wire feeder (103) to feed a second wire (105) at a second feed rate into the weld pool (113) while a second wire end of the second wire (105) melts into the weld pool (113);
and being **characterised by**:
moving, independently of the electrode wire feeder, the second wire feeder (103) relative to the workpiece (111) at a second travel speed; and
dynamically controlling the second feed rate while the second wire feeder (103) moves relative to the workpiece (111),
wherein moving the electrode wire feeder (102) relative to the workpiece (111) moves the weld pool (113).

7. The method of claim 6, wherein:
a power value is an amount of electric power in the input electric power; a travel speed value indicates the first travel speed; and
the second feed rate is determined using the power value, the travel speed value, and the first feed rate.

8. The method of claim 7, wherein:
a deposition defect indicates that the power value has exceeded a power value threshold; a defect detector is used to determine the power value threshold; and
the power value is set based on the power value threshold,
or wherein the second feed rate maximizes a material deposition rate that is a function of the power value that is the amount of electric power in the input electric power, and optionally wherein the first feed rate, an electrode wire cross-section area, the second feed rate, and a second wire cross-section area determine the material deposition rate.

9. The method of claim 6, wherein moving the second wire feeder (103) relative to the workpiece (111) controls the cooling profile of the weld pool (113).

## Patentansprüche

1. System, umfassend:
einen Elektrodendraht (104), der ein Elektrodenende aufweist;
einen zweiten Draht (105), der ein zweites Drahtende aufweist;
eine elektrische Energiequelle, die konfiguriert ist, um eine elektrische Eingangsleistung durch den Elektrodendraht (104) zu einem Schmelzbad (113) auf einem Werkstück (111) bereitzustellen;
eine Elektrodendrahtvorschubeinrichtung (102), die konfiguriert ist, um den Elektrodendraht (104) mit einer ersten Vorschubgeschwindigkeit in das Schmelzbad zuzuführen, während das Elektrodenende in das Schmelzbad (113) hinein schmilzt;
einen ersten Bewegungssteuerungsaktuator (301), der konfiguriert ist, um die Elektrodendrahtvorschubeinrichtung (102) derart relativ zum Werkstück (111) zu bewegen, dass sich die Elektrodendrahtvorschubeinrichtung (102) mit einer ersten Verfahrgeschwindigkeit relativ zum Werkstück (111) bewegt;
eine zweite Drahtvorschubeinrichtung (103), die konfiguriert ist, um den zweiten Draht (105) mit einer zweiten Vorschubgeschwindigkeit in das Schmelzbad zuzuführen, während das zweite Drahtende in das Schmelzbad (113) hinein schmilzt;
**dadurch gekennzeichnet, dass** das Verfahren ferner umfasst:
einen zweiten Bewegungssteuerungsaktuator (302), der konfiguriert ist, um die zweite Drahtvorschubeinrichtung (103) derart relativ zu dem Werkstück (111) zu bewegen, dass sich die zweite Drahtvorschubeinrichtung (103) mit einer zweiten Verfahrgeschwindigkeit relativ zu dem Werkstück (111) bewegt, wobei die zweite Drahtvorschubeinrichtung unabhängig von der Elektrodendrahtvorschubeinrichtung bewegbar ist; und
eine Drucksteuerung (115), die konfiguriert ist, um die Elektrodendrahtvorschubeinrichtung (102) und die zweite Drahtvorschubeinrichtung (103) dynamisch zu steuern, während sich die Elektrodendrahtvorschubeinrichtung (102) und die zweite Drahtvorschubeinrichtung (103) relativ zu dem Werkstück (111) bewegen,
wobei das Bewegen der Elektrodendrahtvorschubeinrichtung (102) relativ zum Werkstück das Schmelzbad (113) bewegt.

2. System nach Anspruch 1, wobei die zweite Drahtvorschubeinrichtung (103) so positioniert ist, dass das zweite Drahtende während dem Drucken in eine Vorderkante des Schmelzbads (113) zugeführt wird.

3. System nach Anspruch 1, wobei:
die Drucksteuerung (115) konfiguriert ist, um die zweite Drahtvorschubeinrichtung (103) durch Bereitstellen eines zweiten Vorschubgeschwindigkeits-Steuersignals (118) zum Zuführen des zweiten Drahts mit der zweiten Vorschubgeschwindigkeit zu steuern, wobei die zweite Vorschubgeschwindigkeit unter Verwendung der elektrischen Eingangsleistung, einer Geschwindigkeit, mit der das Schmelzbad relativ zu dem Werkstück bewegt wird, und der ersten Vorschubgeschwindigkeit bestimmt wird.

4. System nach Anspruch 1, wobei das Bewegen der zweiten Drahtvorschubeinrichtung (103) relativ zum Werkstück (111) das Kühlprofil des Schmelzbads (113) steuert.

5. System nach Anspruch 1, ferner umfassend einen Defektdetektor, wobei die Drucksteuerung die elektrische Eingangsleistung basierend auf dem Empfang eines Defektdetektionssignals von dem Defektdetektor ändern kann.

6. Verfahren, umfassend:
Bereitstellen einer elektrischen Eingangsleistung durch einen Elektrodendraht (104) zu einem Schmelzbad (113);
Verwenden einer Elektrodendrahtvorschubeinrichtung (102) zum Zuführen des Elektrodendrahts (104) mit einer ersten Vorschubgeschwindigkeit in das Schmelzbad (113) auf einem Werkstück (111), während ein Elektrodenende des Elektrodendrahts (104) in das Schmelzbad (113) hinein schmilzt;
Bewegen der Elektrodendrahtvorschubeinrichtung (102) relativ zum Werkstück (111) mit einer ersten Verfahrgeschwindigkeit;
Verwenden einer zweiten Drahtvorschubeinrichtung (103) zum Zuführen eines zweiten Drahtes (105) mit einer zweiten Vorschubgeschwindigkeit in das Schmelzbad (113), während ein zweites Drahtende des zweiten Drahtes (105) in das Schmelzbad (113) hinein schmilzt;
und **gekennzeichnet durch:**
Bewegen der zweiten Drahtvorschubeinrichtung (103) relativ zum Werkstück (111) mit einer zweiten Verfahrgeschwindigkeit, unabhängig von der Elektrodendrahtvorschubeinrichtung; und
dynamisches Steuern der zweiten Vorschubgeschwindigkeit, während sich die zweite Drahtvorschubeinrichtung (103) relativ zum Werkstück (111) bewegt,
wobei das Bewegen der Elektrodendrahtvorschubeinrichtung (102) relativ zum Werkstück (111) das Schmelzbad (113) bewegt.

7. Verfahren nach Anspruch 6, wobei:
ein Leistungswert eine Menge an elektrischer Leistung in der elektrischen Eingangsleistung ist; ein Verfahrgeschwindigkeitswert die erste Verfahrgeschwindigkeit anzeigt; und
die zweite Vorschubgeschwindigkeit unter Verwendung des Leistungswerts, des Verfahrgeschwindigkeitswerts und der ersten Vorschubgeschwindigkeit bestimmt wird.

8. Verfahren nach Anspruch 7, wobei:
ein Abscheidungsdefekt anzeigt, dass der Leistungswert einen Leistungswertschwellenwert überschritten hat; ein Defektdetektor verwendet wird, um den Leistungswertschwellenwert zu bestimmen; und
der Leistungswert basierend auf dem Leistungswertschwellenwert eingestellt wird,
oder wobei die zweite Vorschubgeschwindigkeit eine Materialabscheidungsrate maximiert, die eine Funktion des Leistungswerts ist, der die Menge an elektrischer Leistung in der elektrischen Eingangsleistung ist, und optional wobei die erste Vorschubgeschwindigkeit, eine Elektrodendrahtquerschnittsfläche, die zweite Vorschubgeschwindigkeit und eine zweite Drahtquerschnittsfläche die Materialabscheidungsrate bestimmen.

9. Verfahren nach Anspruch 6, wobei das Bewegen der zweiten Drahtvorschubeinrichtung (103) relativ zum Werkstück (111) das Kühlprofil des Schmelzbads (113) steuert.

## Revendications

1. Système comprenant :
un fil d'électrode (104) qui a une extrémité d'électrode ;
un second fil (105) qui a une seconde extrémité ;
une source d'énergie électrique configurée pour fournir une énergie électrique d'entrée par l'intermédiaire du fil-électrode (104) à un bain de soudure (113) sur une pièce à usiner (111) ;
un dispositif d'alimentation en fil de fil-électrode (102) configuré pour alimenter le fil-électrode (104) dans le bain de soudure à une première vitesse d'alimentation pendant que l'extrémité de l'électrode fond dans le bain de soudure (113) ;
un premier actionneur de commande de mouvement (301) configuré pour déplacer le dispositif d'alimentation en fil de fil d'électrode (102) par rapport à la pièce à usiner (111) de sorte que le dispositif d'alimentation en fil de fil d'électrode (102) se déplace à une première vitesse de déplacement par rapport à la pièce à usiner (111) ;
un second dispositif d'alimentation en fil (103) configuré pour alimenter le second fil (105) dans le bain de soudure à une seconde vitesse d'alimentation pendant que la seconde extrémité du fil fond dans le bain de soudure (113) ;
**caractérisé en ce que** le système comprend en outre :
un second actionneur de commande de mouvement (302) configuré pour déplacer le second dispositif d'alimentation en fil (103) par rapport à la pièce à usiner (111) de manière à ce que le second dispositif d'alimentation en fil (103) se déplace à une seconde vitesse de déplacement par rapport à la pièce à usiner (111), le second dispositif d'alimentation en fil pouvant être déplacé indépendamment du dispositif d'alimentation en fil d'électrodes ; et
un dispositif de commande d'impression (115) configuré pour commander dynamiquement le dispositif d'alimentation en fil de fil d'électrode (102) et le second dispositif d'alimentation en fil de fil (103) pendant que le dispositif d'alimentation en fil de fil d'électrode (102) et le second dispositif d'alimentation en fil de fil (103) se déplacent par rapport à la pièce à usiner (111),
dans lequel le déplacement du dispositif d'alimentation en fil de fil-électrode (102) par rapport à la pièce à usiner déplace le bain de soudure (113).

2. Système selon la revendication 1, dans lequel le second dispositif d'alimentation en fil de fil (103) est positionné de telle sorte que la seconde extrémité du fil est introduite dans un bord d'attaque du bain de soudure (113) pendant l'impression.

3. Système selon la revendication 1, dans lequel :
le dispositif de commande d'impression (115) est configuré pour commander le second dispositif d'alimentation en fil (103) en fournissant un second signal de commande de vitesse d'alimentation (118) pour alimenter le second fil à la seconde vitesse d'alimentation, la seconde vitesse d'alimentation étant déterminée à l'aide de la puissance électrique d'entrée, d'une vitesse à laquelle le bain de soudure est déplacé par rapport à la pièce à usiner et de la première vitesse d'alimentation.

4. Système selon la revendication 1, dans lequel le déplacement du second dispositif d'alimentation en fil (103) par rapport à la pièce à usiner (111) commande le profil de refroidissement du bain de soudure (113).

5. Système selon la revendication 1, comprenant en outre un détecteur de défauts, dans lequel le dispositif de commande d'impression peut modifier la puissance électrique d'entrée en fonction de la réception d'un signal de détection de défauts provenant du détecteur de défauts.

6. Procédé comprenant :
la fourniture d'une puissance électrique d'entrée par l'intermédiaire d'un fil électrode (104) à un bain de soudure (113) ;
à l'aide d'un dispositif d'alimentation en fil de fil-électrode (102) pour alimenter le fil-électrode (104) à une première vitesse d'alimentation dans le bain de soudure (113) sur une pièce à usiner (111) pendant qu'une extrémité de l'électrode du fil-électrode (104) fond dans le bain de soudure (113) ;
le déplacement du dispositif d'alimentation en fil de fil d'électrode (102) par rapport à la pièce à usiner (111) à une première vitesse de déplacement ;
l'utilisation d'un second dispositif d'alimentation en fil (103) pour alimenter un second fil (105) à une seconde vitesse d'alimentation dans le bain de soudure (113) pendant qu'une seconde extrémité du second fil (105) fond dans le bain de soudure (113) ;
et étant caractérisant par:
le déplacement, indépendamment du dispositif d'alimentation en fil de fil d'électrode, du second dispositif d'alimentation en fil de fil (103) par rapport à la pièce à usiner (111) à une seconde vitesse de déplacement ; et
la commande dynamiquement de la seconde vitesse d'avance pendant que le second dispositif d'alimentation en fil (103) se déplace par rapport à la pièce à usiner (111),
dans lequel le déplacement du dispositif d'alimentation en fil de fil-électrode (102) par rapport à la pièce à usiner (111) déplace le bain de soudure (113).

7. Procédé selon la revendication 6, dans lequel :
une valeur de puissance est une quantité de puissance électrique dans la puissance électrique d'entrée ; une valeur de vitesse de déplacement indique la première vitesse de déplacement ; et
la seconde vitesse d'avance est déterminée à l'aide de la valeur de la puissance, de la valeur de vitesse de déplacement et de la première vitesse d'alimentation.

8. Procédé selon la revendication 7, dans lequel :
un défaut de dépôt indique que la valeur de puissance a dépassé un seuil de valeur de puissance ; un détecteur de défauts est utilisé pour déterminer le seuil de valeur de puissance ; et
la valeur de puissance est fixée sur la base du seuil de valeur de puissance,
ou dans lequel la seconde vitesse d'alimentation maximise une vitesse de dépôt de matériau qui est fonction de la valeur de puissance qui est la quantité de puissance électrique dans la puissance électrique d'entrée, et éventuellement dans lequel la première vitesse d'alimentation, une surface de section de fil d'électrode, la seconde vitesse d'alimentation, et une seconde surface de section de fil déterminent la vitesse de dépôt de matériau.

9. Procédé selon la revendication 6, dans lequel le déplacement du second dispositif d'alimentation en fil (103) par rapport à la pièce à usiner (111) commande le profil de refroidissement du bain de soudure (113).
